# EUROPEAN PATENT APPLICATION

(11) **EP 3 056 676 A1**
(43) Date of publication of application: **17.08.2016**
(21) Application number: 16155325.0
(22) Date of filing: 11.02.2016
(51) Int. Cl.: F01D 5/20, F01D 11/12

(54) **TURBINE ENGINE COMPONENT, PROCESS FOR COATING AND MODIFIED BLADE TIP**

(30) Priority: 12.02.2015 US 201514620300
(71) Applicant: United Technologies Corporation, Farmington, CT 06032 (US)
(72) Inventor: STROCK, Christopher W., Kennebunk, ME 04043 (US)
(74) Representative: Leckey, David Herbert

(57) **Abstract**

A modified blade tip (14) with abrasive coating (16) comprises a blade having a tip (14) with a center (36) between corners (22) proximate a leading edge (24) and a trailing edge (26). The blade (10) having a top surface, the top surface being modified proximate said corners (22). The abrasive coating (16) is bonded to the tip (14) at the top surface. The abrasive coating (16) is thicker proximate the corners (22) than at the center (36) of the blade tip (14).

## Description

### BACKGROUND

The present disclosure is directed to abrasive blade tip coating. More particularly, a modified tip that lowers the blade tip material in strategic locations and replaces the removed tip material with a composite structure including a matrix and grit particles of the abrasive blade tip coating.

Gas turbine engines and other turbomachines have rows of rotating blades contained within a generally cylindrical case. As the blades rotate, their tips move in close proximity to the case. To maximize engine operating efficiency, the leakage of the gas or other working fluid around the blade tips should be minimized. This may be achieved by blade and sealing systems in which the blade tips rub against a seal attached to the interior of the engine case. Generally, the blade tip is made to be harder and more abrasive than the seal; thus, the blade tips will cut into the seal during those portions of the engine operating cycle when they come into contact with each other.

During the operation of a gas turbine engine, it is desired to maintain minimum clearance between the tips of the turbine blades and the corresponding seals. A large gap results in decreased efficiency of the turbine, due to the escape of high-energy gases. Conversely, friction between the blades and seals causes excessive component wear and wastes energy. Since aircraft turbines experience cyclic mechanical and thermal load variations during operation their geometry varies during the different stages of the operating cycle. Active clearance control and abrasive blade tips are currently used to establish and maintain optimum clearance during operation. Ideally, those tips should retain their cutting action over many operating cycles compensating for any progressive changes in turbine geometry.

During certain engine operating conditions engines have shown very high radial interaction rate (∼40"/s) that cause rapid depletion of the abrasive grit portions of the abrasive blade tip coating when rubbed against the air seals.

The unwanted rubbing of exposed blade tips, such as Ti blade material, results from the depletion of the abrasive blade tip coating. This results in Ti blade material contact with the abradable material of the air seal. The Ti blade material contact with the abradable where the abrasive has been depleted can create Ti sparking which has the potential to cause unwanted ignition within the gas turbine engine. To remedy the unwanted contact of the blade tip on the abradable seal material at the worst case location, the R3 seal is being pre-trenched by 25 mils (0.635 mm)to prevent tip contact with the abradable. The pre-trenching opens clearance, and thus reduces efficiency and operability.

An abrasive tip is needed that provides a higher wear ratio with abradable outer air seal material. There is a need to provide a blade tip system that can provide better protection of the Ti blade tip material from contact with the abradable at the high interaction rates associated with certain off-normal engine operating conditions, such as, a bird strike and surge.

### SUMMARY

In accordance with the present disclosure, there is provided a modified blade tip with abrasive coating comprising a blade having a tip with a center between corners proximate a leading edge and a trailing edge, the blade having a top surface, the top surface being modified proximate said corners. The abrasive coating is bonded to the tip at the top surface; wherein the abrasive coating is thicker proximate the corners than at the center of the blade tip.

In another and alternative embodiment, the abrasive coating further comprises a plurality of grit particles dispersed over said top surface of the blade tip. A matrix material is bonded to the top surface. The matrix material envelops and bonds to and partially surrounds the grit particles, wherein the grit particles extend above the matrix material relative to the top surface.

In another and alternative embodiment, the matrix material comprises a matrix formed from MCrAlY, wherein M is Ni or Co.

In another and alternative embodiment, the blade tip is reduced in thickness proximate to the corners.

In another and alternative embodiment, an adhesion layer is coupled to the top surface, wherein the adhesion layer is configured to adhere the grit particles to the top surface.

In another and alternative embodiment, the adhesion layer comprises the same material as the matrix material.

In another and alternative embodiment, a bond layer is bonded to the top surface.

In another and alternative embodiment, a turbine engine component comprises an airfoil portion having a tip; the tip comprises reduced corners proximate a leading edge and a trailing edge of the airfoil. A composite abrasive coating is bonded to the tip. The composite abrasive coating comprises an adhesion layer bonded to the tip. A layer of grit particles is bonded to the adhesion layer in a matrix material surrounding an unexposed portion of the grit particles. The matrix material is coupled to the adhesion layer; wherein the composite abrasive coating is thicker proximate the corners.

In another and alternative embodiment, the coating includes a thicker region at locations most likely to rub an air seal.

In another and alternative embodiment, the tip is reduced to a depth greater than a rub depth.

In another and alternative embodiment, the composite abrasive coating comprises a thickness at the corners of about 30 mils (0.762 mm).

In another and alternative embodiment, the composite abrasive coating includes a taper from the corners inwardly at about a 30 degree angle resulting in a thickness of about 6 mils (0.1524 mm)proximate a center of the airfoil.

In another and alternative embodiment, the turbine engine component is a blade.

In another and alternative embodiment, a process for coating a turbine engine blade with an abrasive comprises reducing the thickness of a tip of the blade proximate at least one corner of the tip; applying an adhesion layer onto the tip of the blade; adhering a plurality of grit particles to the adhesion layer, wherein narrow spaces are formed between the grit particles; filling the narrow spaces between the grit particles with a matrix material; surrounding each of the grit particles with the matrix material exposing a portion of the grit particles above the matrix material; wherein the grit particles and the matrix material have a thickness greater than the reduced thickness of the tip proximate the at least one corner.

In another and alternative embodiment, the tip is reduced to a depth greater than a rub depth.

In another and alternative embodiment, the matrix material and the grit particles are applied as a thicker region at locations most likely to rub an air seal.

In another and alternative embodiment, the process further comprises tapering a thickness of the tip reduction from the corners inwardly at about a 30 degree angle resulting in a thickness of the grit particles and matrix coating of about 30 mils (0.762 mm) proximate the at least one corner and a thickness of about 6 mils (0.1524 mm) proximate a center of the blade.

In another and alternative embodiment, the process further comprises applying a base layer to the blade tip prior to applying the adhesion layer.

Other details of the abrasive blade tip coating are set forth in the following detailed description and the accompanying drawing wherein like reference numerals depict like elements.

### BRIEF DESCRIPTION OF THE DRAWINGS

FIG. 1 is a schematic representation of abrasive composite coating applied to a modified tip of a turbine engine component;
FIG. 2 is a schematic representation of abrasive composite coating applied to a modified tip of a turbine engine component; and
FIG. 3 is a schematic cross-sectional view of the exemplary abrasive blade tip coating.

### DETAILED DESCRIPTION

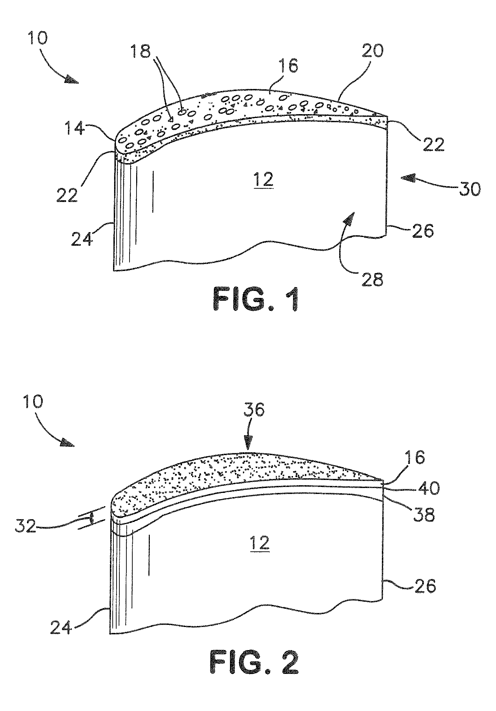

Referring now to FIG. 1 there is illustrated a turbine engine component 10, such as a compressor blade or vane. The blade 10 has an airfoil portion 12 with a tip 14. The tip 14 has an abrasive coating 16 applied to it. The abrasive coating 16, comprises a composite material that includes an abrasive particulate/grit or simply grit 18, such as cubic boron nitride (CBN), coated Silicon carbide (SiC), or another hard ceramic phase. In an exemplary embodiment, the grit 18 can comprise, zirconia, aluminum diboride, aluminum nitride, aluminum nitride-cabon, or diamond. The grit 18 can be sized as a coarse grit. In an exemplary embodiment the grit 18 can be sized from about 70 to about 150 microns. The grit 18 is embedded in a plating layer matrix composite 20. The matrix 20 comprises a suitable oxidation-resistant alloy matrix. In an exemplary embedment the plating layer comprises a matrix formed from MCrAlY, the M standing for either Ni or Co or both. In an exemplary embodiment, the matrix 20 can comprise pure nickel, copper, copper alloy, cobalt, cobalt alloy, or chrome alloy.

The tip 14 has been modified at the tip corner 22. The blade tip 14 material is cut back at each tip corner 22 that most likely impacts the abradable seal material (not shown). The abrasive coating 16 is added at the locations that the tip 14 corner 22 has been reduced. The modification creates a thicker region of abrasive coating 16 at the locations most likely to rub. The modified tip 14 also locates the tip 14 material of the blade 10 farther away from the locations most likely to rub. The resulting blade tip 14 with thickened abrasive coating 16 is particularly well suited for rubbing metal as well as ceramic air seals (not shown).

The turbine engine component/blade 10 may be formed from a titanium-based alloy or a nickel-based alloy. In an exemplary embodiment, the blade 10 includes a (Ti) titanium-based alloy. The blade 10 includes a leading edge 24 and a trailing edge 26 opposite the leading edge 24. The blade 14 also includes a suction side 28 of the airfoil 12 and a pressure side 30 opposite the suction side 28 of the airfoil 12.

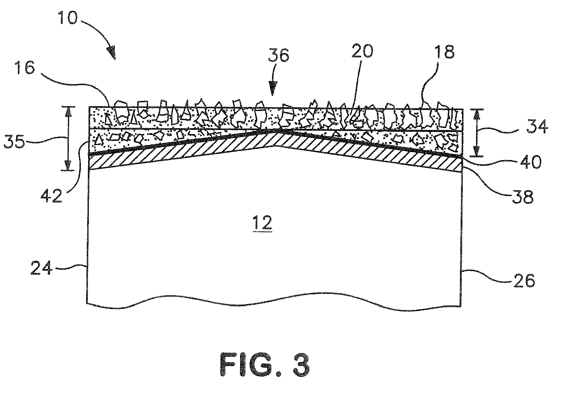

Referring to FIG. 2 and FIG. 3 an exemplary abrasive coating 16 on a modified blade tip 14 is shown. The abrasive coating 16 includes the grit particles 18 interspersed throughout the matrix 20. The abrasive coating 16 is applied in a thicker layer proximate the corners 22 of the tip 14. In an exemplary embodiment, the corners 22 of the leading edge 24 and trailing edge 26 are cut back based on a predetermined rub depth 32. In an exemplary embodiment, the rub depth can be 0.030 inches (0.762 mm). Thus, the thickness 34 of the abrasive coating 16 at the corners 22 can be about 30 mils (0.762 mm). The thickness 34 of the coating 16 can then be tapered from the corners 22 inwardly at about a 30 degree angle resulting in a thickness of about 6 mils (0.1524 mm) near a center 36 of the airfoil 12. In another exemplary embodiment, the tip 14 can be cut back in a profile similar to a "hip roof" with corners cut and edges along the tip cut between the corners.

In an exemplary embodiment, the grit particles 18 range in size from about 0.04 to about 0.15 millimeters (mm) nominally. Grit 18 particle sizes can range up to about 0.15 mm nominally. An exemplary embodiment can include grit 18 from a DURALUM ATZ II R brand from Washington Mills, of dense fused alumina-zirconia refractor grain.

The abrasive coating 16 can include a base layer 38 bonded to the blade tip 14. The base layer 38 can be applied directly to the tip 14 to improve adhesion of the coating 16. The base layer 24 can be optionally applied. With the addition of the base layer 38 the abrasive coating 16 has a thickness 35.

An adhesion layer 40 comprising the plating material utilized in the matrix 20 can be applied to the base layer 38 or can be coated directly to a top surface of the blade tip 14. The adhesion layer 40 prepares the surface of the tip 14 for the first grit 18 to adhere to during application of the first grit 18. The adhesion layer 40 can comprise the same basic material as the matrix 20 or other beneficial materials that bind the grit 18 to the blade tip 14 or alternatively the base layer 38. In an exemplary embodiment the adhesion layer 40 comprises a Ni alloy matrix material. In alternative embodiments, the adhesion layer 40 can comprise, pure nickel, copper or copper alloy, cobalt or cobalt alloy, or a chrome alloy.

In an exemplary embodiment, the abrasive coating 16 can be applied thicker near the corners 22 similar to a wedge shape 42 as shown in cross-section at FIG. 3. The remainder of the coating layer 16 can then be applied to level off the coating 16 to form the final blade 10 shape. In another exemplary embodiment, the abrasive coating 16 can be applies thinner than the base layer 38 and the base layer 38 being thicker and vice versa.

The exemplary abrasive coating 16 includes a portion of each grit particle 18 projecting outward above the surface of the matrix material 20, thereby enabling favorable rubbing interaction with metal or ceramic seals during engine operation. The unexposed portion of the grit particles 18 are surrounded by matrix material 20. The grit particles 18 can be spaced apart from each other with a minimal distance of separation and arranged uniformly spaced apart. The matrix material 20, as well as grit particles 18 can be securely bonded to the blade tip 14.

The current disclosure includes an improvement to previously known abrasive coating. The modified blade tip and additional coating adds thickness to the Ni matrix abrasive tip. The improvement provides more Ni/abrasive thickness so that more abradable can be cut at a given wear ratio. The improvement further separates the Ti blade material from the abradable seal at existing build clearance so that the blade can tolerate more wear before the Ti blade material is rubbed directly by the abradable seal material. The modified blade tip and thicker coating system adds Ni thickness to base layer under the abrasive or in an alternative embodiment utilizes a thicker layer of abrasive. In an exemplary embodiment that free corners of the abrasive have been shown to wear preferentially and that there is a benefit to applying the added thickness. In alternative embodiments the coating is applied only to the leading and trailing tip corners. Operability and efficiency can be maintained by using existing build clearances while the contact of Ti blade material to abradable seal material can be prevented. Thus, a reduction in the likelihood of creating an ignition source in the gas turbine engine is achieved. The improved blade tip can also improve resistance to unwanted wear in both the radial incursion as well as any possible axial incursion due to the twisting motion of the blade.

There has been provided a modified blade tip with thickened coating. While the abrasive blade tip and coating has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A turbine engine component (10) comprising:
an airfoil portion having a tip (14);
said tip (14) comprising reduced corners (22) proximate a leading edge (24) and a trailing edge (26) of said airfoil;
a composite abrasive coating (16) bonded to said tip (14) ;
said composite abrasive coating (16) comprising an adhesion layer (40) bonded to said tip (14);
a layer of grit particles (18) bonded to said adhesion layer (40) in a matrix material (20) surrounding an unexposed portion of said grit particles (18); said matrix material (20) coupled to said adhesion layer (40); wherein said composite abrasive coating (16) is thicker proximate said corners (22).

2. The turbine engine component according to claim 1, wherein said coating (16) includes a thicker region at locations most likely to rub an air seal.

3. The turbine engine component according to claim 1 or 2, wherein said tip (14) is reduced to a depth greater than a rub depth.

4. The turbine engine component according to any preceding claim, wherein said composite abrasive coating (16) comprises a thickness at the corners (22) of about 30 mils (0.762 mm).

5. The turbine engine component according to any preceding claim, wherein said composite abrasive coating (16) includes a taper from said corners (22) inwardly at about a 30 degree angle resulting in a thickness of about 6 mils (0.1524 mm) proximate a center (36) of the airfoil.

6. The turbine engine component according to any preceding claim, wherein said matrix material (20) comprises a matrix formed from MCrAlY, wherein M is Ni or Co.

7. The turbine engine component according to any preceding claim, wherein said turbine engine component is a blade (10).

8. A process for coating a turbine engine blade (10) with an abrasive, said process comprising:
reducing the thickness of a tip (14) of said blade (10) proximate at least one corner (22) of said tip (14);
applying an adhesion layer (40) onto said tip (14) of said blade;
adhering a plurality of grit particles (18) to said adhesion layer (40), wherein narrow spaces are formed between said grit particles (18);
filling said narrow spaces between said grit particles (18) with a matrix material (20); and
surrounding each of said grit particles (18) with said matrix material exposing a portion of said grit particles (18) above said matrix material; wherein said grit particles (18) and said matrix material (20) have a thickness greater than the reduced thickness of said tip (14) proximate said at least one corner (22).

9. The process of claim 8, wherein said tip (14) is reduced to a depth greater than a rub depth.

10. The process of claim 8 or 9, wherein said matrix material (20) and said grit particles (18) are applied as a thicker region at locations most likely to rub an air seal.

11. The process of claim 8, 9 or 10, further comprising:
tapering a thickness of said tip reduction from said corners (22) inwardly at about a 30 degree angle resulting in a thickness of said grit particles (18) and matrix coating (20) of about 30 mils (0.762 mm) proximate said at least one corner (22) and a thickness of about 6 mils (0.1524 mm) proximate a center (36) of the blade (10).

12. The process of any of claims 8 to 11, further comprising applying a base layer (38) to said blade tip (14) prior to applying said adhesion layer (40).

13. A modified blade tip with abrasive coating (16) comprising:
a blade (10) having a tip (14) with a center (36) between corners (22) proximate a leading edge (24) and a trailing edge (26), said blade (10) having a top surface, said top surface being modified proximate said corners (22);
said abrasive coating (16) bonded to said tip (14) at said top surface; wherein said abrasive coating (16) is thicker proximate said corners (22) than at said center (36) of said blade tip (14).

14. The blade with abrasive coating according to claim 13, further comprising:
an adhesion layer (40) coupled to said top surface, wherein said adhesion layer (40) is configured to adhere said grit particles (18) to said top surface.

15. The blade with abrasive coating according to claim 14, wherein said adhesion layer (40) comprises the same material as said matrix material (20).
